# DEMANDE DE BREVET EUROPEEN

(11) **EP 0 976 952 A1**
(43) Date de publication de la demande: **02.02.2000**
(21) Numéro de dépôt: 99401847.1
(22) Date de dépôt: 21.07.1999
(51) Int. Cl.: F16H 57/02

(54) **Boîte de vitesses comportant des paliers d'arbres portés par deux demi-cloisons intérieures**

(30) Priorité: 28.07.1998 FR 9809653
(71) Demandeur: RENAULT, 92109 Boulogne-Billancourt (FR)
(72) Inventeur: Loscq, Robert, 78310 Maurepas (FR); Raoul, Michel, 78990 Elancourt (FR)

(57) **Abrégé**

L'invention concerne une boîte de vitesses (10) à au moins deux arbres longitudinaux parallèles primaire (12) et secondaire (14) dont chacun est guidé en rotation par deux paliers d'extrémité (24, 26, 30, 32) qui sont respectivement portés par deux parties avant (18) et arrière (20) d'un carter (16) de boîte, caractérisée en ce que chaque arbre (12, 14) est guidé en rotation par un troisième palier central, et en ce que les deux paliers centraux (34, 36) de l'arbre primaire (12) et de l'arbre secondaire (14) sont respectivement portés par une première (38) et une seconde (40) demi-cloisons solidaires de la partie arrière (20) du carter (16) de boîte.

Application à une boîte mécanique de véhicule automobile.

## Description

L'invention concerne une boîte de vitesses, notamment d'une boîte mécanique de véhicule automobile, comportant un carter à trois paliers par arbre.

L'invention concerne plus particulièrement une boîte de vitesses à au moins deux arbres longitudinaux parallèles primaire et secondaire dont chacun est guidé en rotation par deux paliers d'extrémité qui sont respectivement portés par deux parties avant et arrière d'un carter de boîte.

On connaît de nombreuses boîtes de vitesses à au moins deux arbres, primaire et secondaire, qui comportent une partie avant de carter, qui reçoit par exemple un embrayage, et une partie arrière de carter, qui reçoit par exemple les pignons ou les fourchettes de commande des pignons, les parties avant et arrière supportant les arbres par des roulements à billes ou des roulements à rouleaux.

Le document EP-B1-0.224.407 décrit et représente un exemple de conception d'une telle boîte.

L'ensemble des pignons portés par chaque arbre correspondant aux différents rapports est groupé entre les deux paliers d'extrémité qui sont ainsi nécessairement éloignés axialement. Les conditions de fiabilité et de fonctionnement silencieux des dentures nécessitent de minimiser le fléchissement des arbres, ce qui conduit, dans de telles boîtes, à un surdimensionnement diamétral important des arbres et des paliers.

Une première conséquence en est la dégradation de la traînée de frottement en rotation, avec des effets néfastes sur les prestations de passage des vitesses et sur le rendement global de la boîte.

Par ailleurs, le basculement d'un pignon fou sous charge dépend du rapport entre la longueur et le diamètre de son palier. Compte tenu des contraintes résultant de la longueur réduite de la boîte, et donc de la réduction des longueurs de palier, l'augmentation du diamètre du palier augmente le basculement du pignon fou sous charge.

Afin d'éviter le surdimensionnement des paliers, une première solution consiste à proposer une boîte de vitesses du type décrit précédemment dans laquelle chaque arbre est guidé en rotation par un troisième palier central, et dans laquelle les deux paliers centraux sont portés par une plaque centrale constituant une troisième partie centrale de carter. Une telle conception est décrite et représentée dans le document US-A-5.097.717.

Toutefois, une telle conception, si elle remédie aux inconvénients précités, présente d'autres inconvénients comparables.

En effet, une conception de boîte de vitesses comportant une telle plaque centrale conduit à un montage hyperstatique auquel il est possible de remédier en réalisant un alignement des trois paliers de chaque arbre, ce qui conduit, lors de la fabrication de la boîte de vitesses à réaliser une finition simultanée d'au moins deux des trois paliers de chaque arbre, pour garantir une coaxialité satisfaisante des dits paliers, la plaque centrale étant mise en place dans le carter de la boîte de vitesses qui contient les pignons. Si l'on désire garder un alignement parfait des trois paliers de la boîte, la plaque centrale doit être associée à son carter.

Par ailleurs, lors de l'assemblage d'une telle boîte de vitesses, la plaque centrale étant d'un seul bloc, les arbres primaire et secondaire doivent nécessairement être montés simultanément, ce qui complique les opérations d'assemblage de la boîte.

Pour remédier à ces inconvénients, l'invention propose une troisième partie centrale de carter permettant d'effectuer un montage isostatique des arbres primaire et secondaire dans le carter de la boîte de vitesses.

Dans ce but, l'invention propose une boîte de vitesses du type précédemment décrit, caractérisée en ce que chaque arbre est guidé en rotation par un troisième palier central, et en ce que les deux paliers centraux de l'arbre primaire et de l'arbre secondaire sont respectivement portés par une première et une seconde demi-cloisons solidaires de la partie arrière du carter de boîte.

Selon d'autres caractéristiques de l'invention :
- les première et seconde demi-cloisons sont agencées dans un même plan transversal, à l'intérieur de la partie arrière du carter de boîte ;
- le plan transversal est délimité par une surface d'épaulement, qui est située à l'intérieur et en position centrale de la partie arrière du carter de boîte, qui est tournée vers l'avant, et contre laquelle les première et seconde demi-cloisons sont en appui axial ;
- les deux demi-cloisons comportent à leur périphérie des oreilles percées, qui s'étendent transversalement, et au moins une oreille de la première demi-cloison s'étend en regard d'une oreille de la deuxième demi cloison d'avant en arrière à la jonction des deux demi-cloisons, ces deux oreilles étant destinées à être traversées par au moins une vis axiale de fixation des deux demi-cloisons à la partie arrière du carter ;
- les deux demi-cloisons comportent, entre des surfaces qui s'étendent axialement dans leur épaisseur, un jeu de montage qui est déterminé par un entraxe déterminé des paliers centraux des arbres primaire et secondaire ;
- la partie arrière du carter comporte une plaque de fermeture qui est rapportée à son extrémité arrière et qui porte le palier d'extrémité arrière de l'arbre primaire et le palier d'extrémité arrière de l'arbre secondaire ;
- la plaque de fermeture comporte des pions qui assurent son positionnement précis en appui axial contre l'extrémité arrière de la partie arrière du carter ;
- la plaque de fermeture est assemblée à l'extrémité arrière du carter par l'intermédiaire de vis axiales de fixation qui traversent des pattes internes de la partie arrière du carter de boîte, et dont les extrémités libres filetées sont reçues dans des taraudages formés dans les oreilles des demi-cloisons, de façon à serrer simultanément la plaque de fermeture en appui axial contre la surface d'extrémité arrière du carter d'une part, et les demi-cloisons en appui contre la surface d'épaulement intérieure du carter d'autre part ; et
- la première demi-cloison comporte un alésage pour recevoir un palier de guidage d'un pignon de marche arrière et des trous pour le guidage d'axes de fourchettes de commande de la boîte de vitesses.

D'autres caractéristiques et avantages de l'invention apparaîtront à la lecture de la description détaillée qui suit pour la compréhension de laquelle on se reportera aux dessins annexés dans lesquels :
- la figure 1 est une vue longitudinale développée en section axiale partielle d'une boîte de vitesses selon l'invention qui comporte deux demi-cloisons montées dans la partie centrale du carter,
- la figure 2 est une vue axiale des deux demi-cloisons selon l'invention représentées séparées,
- la figure 3 est une vue en coupe, selon la ligne 3-3 de la figure 2, des oreilles de fixation des demi-cloisons, et
- les figures 4 et 5 sont des vues similaires à celles des figures 2 et 3 sur lesquelles les deux demi-cloisons selon l'invention sont représentées assemblées.

Dans la description qui va suivre, des chiffres de référence identiques désignent des pièces identiques ou ayant des fonctions similaires.

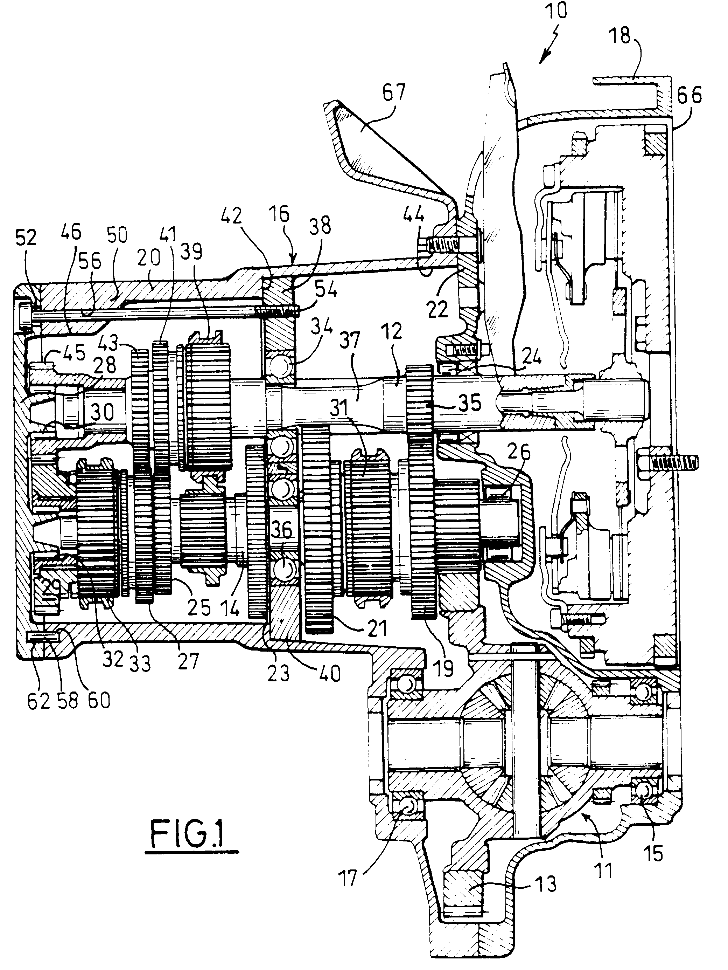

On voit sur la figure 1 l'ensemble d'une boîte de vitesses 10 réalisée suivant l'invention. Il s'agit d'une boîte de vitesses à deux arbres parallèles, un arbre primaire 12 et un arbre secondaire 14, guidés en rotation dans un carter 16 de boîte qui est divisé, de la droite vers la gauche, en une partie avant 18 de carter et une partie arrière 20 de carter. Une cloison transversale 22, appartenant à la partie avant 18 de carter de boîte, porte les paliers respectifs 24 et 26 d'extrémité avant des arbres primaire 12 et secondaire 14. De même, une cloison transversale arrière 28 appartenant à la partie arrière 20 de carter de boîte porte des paliers respectifs 30 et 32 d'extrémité arrière de l'arbre primaire 12 et de l'arbre secondaire 14.

Conformément à l'invention, les arbres primaire 12 et secondaire 14 sont aussi respectivement guidés par des paliers centraux 34 et 36, qui sont montés dans deux demi-cloisons transversales 38 et 40 qui sont assemblées à la partie arrière 20 de carter de boîte 16.

Cette disposition est particulièrement avantageuse car elle permet de réduire la flexion des arbres primaire 12 et secondaire 14 en assurant pour chacun d'eux un guidage en rotation par trois paliers avant, central, et arrière répartis axialement le long de chaque arbre, et dont chacun est de diamètre réduit.

Par ailleurs, la boîte de vitesses 10 comporte un différentiel 11 dont la couronne 13 est guidée en rotation par deux paliers d'extrémité 15 et 17 portés respectivement par des parties avant 18 et arrière 20 du carter 16.

Dans l'exemple illustré sur la figure 1 qui concerne une boîte mécanique à cinq rapports de marche avant et un rapport de marche arrière, la partie avant 18 de carter de boîte 16 est celle de l'embrayage associé à la boîte de vitesses, et la partie arrière 20 est celle des pignons associés aux rapports de marche avant et au rapport de marche arrière.

L'arbre secondaire 14 porte ainsi, d'avant en arrière, le pignon fou 19 du deuxième rapport de marche avant, le pignon fou 21 du premier rapport de marche avant, le pignon fou 23 du rapport de marche arrière, le pignon fixe 25 du cinquième rapport de marche avant, le pignon fou 27 du quatrième rapport de marche avant, le pignon fou 29 du troisième rapport de marche avant. Il porte aussi deux synchroniseurs doubles 31 et 33 disposés respectivement entre les pignons fous 19 du second rapport de marche avant et 21 du premier rapport de marche avant, et entre le pignon fou 27 du quatrième rapport de marche avant et le pignon fou 29 du troisième rapport de marche avant.

L'arbre primaire 12 porte, d'avant en arrière, le pignon fixe 35 du deuxième rapport de marche avant, le pignon fixe 37 du premier rapport de marche avant, le synchroniseur simple 39 du cinquième rapport de marche avant, le pignon fou 41 du cinquième rapport de marche avant, le pignon fixe 43 du quatrième rapport de marche avant et le pignon fixe 45 du troisième rapport de marche avant.

Comme on peut le voir sur la figure 1, cette disposition est d'autant plus avantageuse que le pignon fou 19 du deuxième rapport de marche avant, le pignon fou 21 du premier rapport de marche avant, le pignon fou 23 du rapport de marche arrière et le pignon fou 29 du troisième rapport de marche avant sont à proximité immédiate d'un palier, c'est à dire des paliers respectifs 26, 36 et 32 respectivement, ce qui réduit d'autant plus l'influence néfaste de la flexion de l'arbre secondaire 14 sur l'engrènement, permet d'augmenter la durée de vie des dentures et améliore le silence de fonctionnement.

Par ailleurs, cette réduction des risques de flexion est avantageusement assurée par le choix des roulements associés aux paliers.

Ainsi, les paliers d'extrémité 26 et 32 de l'arbre secondaire 14, qui comportent des roulements à rouleaux cylindriques, supportent une partie importante des efforts radiaux, tandis que le palier central 36, qui comporte un roulement à une rangée de billes à contact radial, assure la reprise des efforts axiaux et d'une partie des efforts radiaux.

De même, les paliers d'extrémité 30 et 24 de l'arbre primaire 12 comportent des roulements à rouleaux, et le palier central 34 comporte un roulement à une rangée de billes à contact radial.

Les deux demi-cloisons 38 et 40 sont agencées dans un même plan transversal qui est sensiblement situé au milieu de la partie arrière 20 du carter 16 de la boîte.

Pour ce faire, les deux demi-cloisons 38 et 40 sont en appui axial sur une surface d'épaulement 42 qui est agencée transversalement à l'intérieur de la partie arrière 20 de carter de boîte 16 et qui est située axialement sensiblement au milieu de la partie arrière 20 de carter de boîte 16. Ainsi, la surface d'épaulement 42 s'étend transversalement à l'intérieur de la partie arrière 20 de carter de boîte à partir de la paroi intérieure 44 du carter, de sorte qu'elle est à même d'offrir une surface d'appui suffisante aux première 38 et deuxième 40 demi-cloisons qui, lors du montage, sont introduites axialement d'avant en arrière jusqu'à ce qu'elles viennent en contact avec la surface d'épaulement 42 de la paroi intérieure 44 de la partie arrière 20 de carter .

La partie arrière 20 de carter de boîte comporte une face d'extrémité arrière plane et transversale 46 qui est destinée à fournir une surface d'appui à la cloison arrière 28. Avantageusement, la cloison arrière 28 est une plaque de fermeture rapportée qui porte le palier d'extrémité arrière 30 de l'arbre primaire 12 et le palier d'extrémité arrière 32 de l'arbre secondaire 14.

Comme on peut le voir sur la figure 1, la plaque de fermeture 28 et les première 38 et deuxième 40 demi-cloisons sont assemblées à la partie arrière 20 de carter de boîte par des vis axiales communes 48 qui permettent de serrer simultanément la plaque de fermeture 28 en appui contre la surface d'extrémité arrière 46 du carter 20, et les demi-cloisons 38 et 40 en appui contre la surface d'épaulement 42 à l'intérieur de la partie arrière 20 de carter. Dans ce but, la partie arrière 20 de carter comporte des pattes internes 50 dont des trous 56 sont agencés en regard de trous 52 de la plaque de fermeture 28 et de taraudages 54 des première 38 et seconde 40 demi-cloisons.

Avantageusement, un bon alignement des trous 52 de la plaque de fermeture 28, des trous 56 des pattes 50 et des taraudages 54 des première 38 et deuxième 40 demi-cloisons est assuré d'une part par des pions 58, qui sont reçus simultanément dans des trous 60 de la partie arrière 20 de carter et 62 de la plaque de fermeture 28, et d'autre part par l'intermédiaire des arbres primaire 12 et secondaire 14 qui garantissent un bon positionnement des première 38 et seconde 40 demi-cloisons lors du montage.

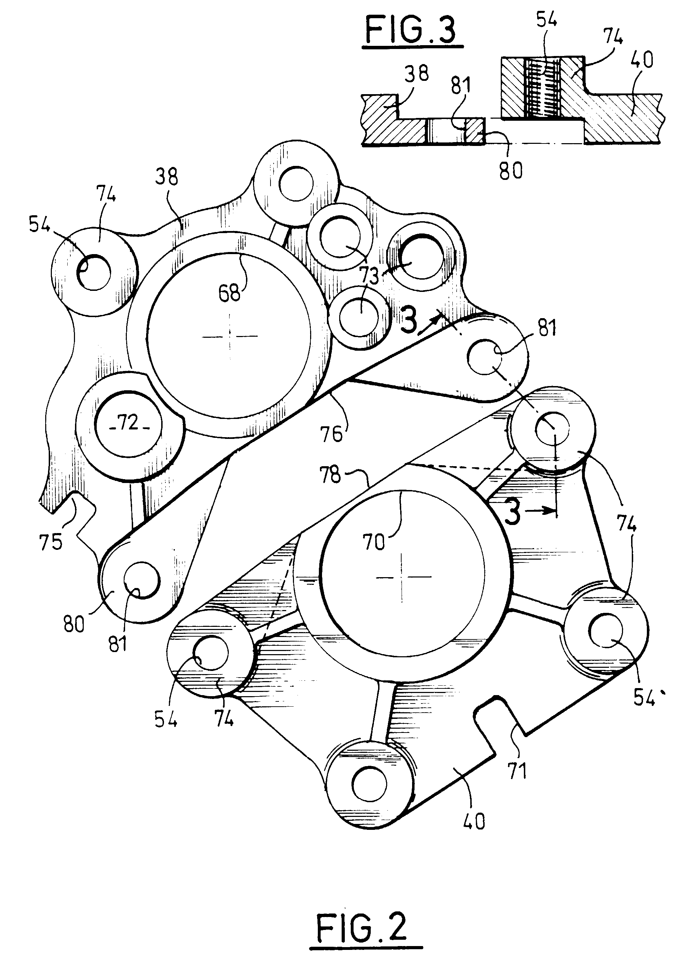

Le positionnement relatif des première 38 et seconde 40 demi-cloisons est assuré, comme on le verra plus en détail en référence aux figures 2 à 5, par une bonne complémentarité de la première demi-cloison 38 par rapport à la seconde demi-cloison 40, qui impose un ordre de montage des deux demi-cloisons. Dans le mode de réalisation préféré de l'invention, et de façon non limitative de l'invention, la première demi-cloison 38 est destinée à être assemblée avant la seconde demi-cloison 40.

En effet, lors du montage de la boîte de vitesses, la partie avant 18 du carter de boîte est par exemple mise en position par l'intermédiaire de sa face avant 66 sur une palette de montage (non représentée). Puis sont successivement assemblés à la partie avant 18 du carter de boîte 20, l'arbre primaire 12, qui est mis en position par l'intermédiaire de son palier d'extrémité avant 24 et qui est solidaire de sa demi-cloison 38 associée, puis l'arbre secondaire 14, qui est mis en position par l'intermédiaire de son palier d'extrémité avant 26, et qui est solidaire de sa demi-cloison 40 associée, puis enfin la partie arrière 20 de carter. Avantageusement, la partie arrière 20 de carter est mise en position de façon déterminée sur la partie avant 18 de carter par l'intermédiaire de plots de centrage (non représenté) porté par la cloison transversale 22 de la partie avant 18 de carter.

La plaque de fermeture 28 peut alors être posée sur la partie arrière 20 de carter, et mise en position par rapport à celui-ci par l'intermédiaire des pions 58 précédemment décrits.

Ainsi, le montage des arbres primaire 12 et secondaire 14 dans leurs paliers 24 et 26 d'une part, et 30 et 32 d'autre part, assure automatiquement un positionnement relatif des deux demi-cloisons 38 et 40 et donc des paliers 34 et 36.

Un opérateur ou un robot vient alors introduire dans les trous 52 de la plaque de fermeture 28 les vis 48 qui réalisent le serrage simultané des demi-cloisons 38 et 40 et de la plaque de fermeture 28 sur la partie arrière 20 de carter.

Les figures 2 et 3 illustrent plus particulièrement les détails de forme des demi-cloisons 38 et 40 et, en relation avec la vue de la figure 1, permet la compréhension de leur assemblage.

Comme on le voit sur la figure 2, la première demi-cloison 38 comporte un alésage 68 destiné à recevoir le palier central 34 de l'arbre primaire 12, et la seconde demi-cloison 40 comporte un alésage 70 destiné à recevoir le palier intermédiaire 36 de l'arbre secondaire 14. La première demi-cloison 38 comporte aussi des perçages 73 qui sont destinés à permettre le guidage d'axes de fourchette (non représentés) et un alésage 72 qui est destiné à recevoir un palier d'un pignon de marche arrière (non représenté). Ma première demi-cloison 38 comporte par ailleurs un ergot 75 qui est destiné à coopérer avec un pion (non représenté) implanté dans la partie arrière 20 du carter de boîte afin d'orienter angulairement la première demi-cloison 38 par rapport à la paroi interne 44 de la partie arrière 20 du carter de boîte.

La seconde demi-cloison 40 comporte aussi, dans sa partie inférieure, un ergot 71 qui est destiné à coopérer avec un pion (non représenté) implanté dans la partie arrière 20 du carter de boîte afin d'orienter angulairement la seconde demi-cloison 40 par rapport à la paroi interne 44 de la partie arrière 20 du carter de boîte.

Chacune des demi-cloisons 38 et 40 présente une forme garantissant que la réunion des deux demi-cloisons 38 et 40, représentée à la figure 3, épouse sensiblement le contour de la paroi intérieure 44 de la partie arrière de carter 20, précédemment décrite en référence à la figure 1. Par ailleurs, chaque demi-cloison 38 et 40 comporte sur sa périphérie des oreilles percées 74 qui comportent les taraudages 54 permettant la fixation des vis 48.

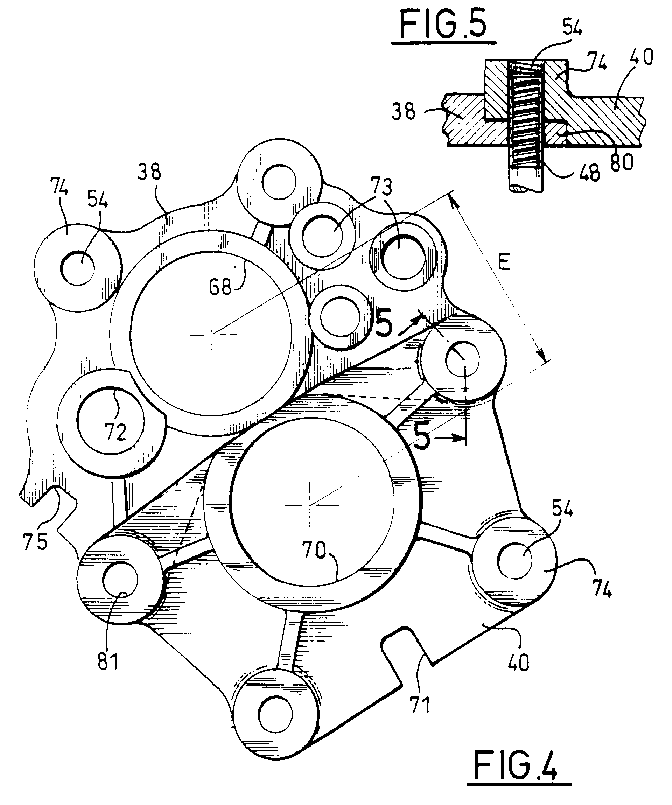

Comme on peut le voir sur la figure 4, l'entraxe E entre les deux demi-cloisons 38 et 40 est défini par les arbres 12 et 14, eux-mêmes mis en position par leurs paliers extrêmes 30, 32 et 24, 26. De la sorte, les deux demi-cloisons 38 et 40 sont, au montage, mises en position sans contrainte, l'entraxe E permettant l'existence d'un jeu de montage entre deux surfaces qui s'étendent transversalement-dans l'épaisseur des demi-cloisons 38 et 40 et que l'on peut voir représentées à la figure 2, c'est à dire la surface 76 qui appartient à la première demi-cloison 38, et la surface 78 qui appartient à la seconde demi-cloison 40.

L'assemblage des demi-cloisons 38 et 40 est par ailleurs favorisé par un chevauchement partiel des deux demi-cloisons 38 et 40.

En effet, dans la zone de jonction des demi-cloisons, on trouve deux oreilles taraudées 74 de la seconde demi-cloison et deux oreilles percées 80 de la première demi-cloison 38. Les oreilles 80 de la première demi-cloison 38 sont d'une épaisseur environ inférieure de moitié à celle de la première demi-cloison 38, et il en est de même des oreilles 74 de la seconde demi-cloison 40. Par ailleurs, les oreilles 80 sont percées de trous 81 et ne sont pas taraudées, alors que les oreilles 74, comme il a été précédemment décrit en référence à la figure 1, sont percées et taraudées des trous 54. Dans la direction axiale, et comme on peut le voir sur la figure 3, les oreilles 80 de la première demi-cloison 38 sont agencées axialement en retrait par rapport aux oreilles 74 de la seconde demi-cloison 40, de sorte que, les oreilles 80 et 74 étant de forme complémentaire, elles sont à même de se chevaucher lors de l'assemblage de la première demi-cloison 38 à la seconde demi-cloison 40. Ainsi, lors de l'assemblage de la boîte de vitesses 10, les vis 48 de fixation traversent les trous 81 des oreilles 80 et se vissent dans les taraudages 54 des oreilles 74 pour effectuer le serrage simultané des demi-cloisons 38 et 40 et de la plaque de fermeture 28. Cet assemblage est plus précisément représenté dans la direction transversale sur la vue de la figure 4 et dans la direction axiale sur la vue de la figure 5.

Entre autres avantages, la conception du carter de la boîte de vitesses 10 en deux parties 18, et 20 permet aussi la réalisation de formes moulées complexes, telles que par exemple une patte extérieure 67 qui permet de réaliser la fixation d'un élément de commande de l'embrayage.

Enfin, cette conception simplifie le montage de la boîte de vitesses 10.

## Revendications

1. Boîte de vitesses (10) à au moins deux arbres longitudinaux parallèles primaire (12) et secondaire (14) dont chacun est guidé en rotation par deux paliers d'extrémité (24, 26, 30, 32) qui sont respectivement portés par deux parties avant (18) et arrière (20) d'un carter (16) de boîte, caractérisée en ce que chaque arbre (12, 14) est guidé en rotation par un troisième palier central, et en ce que les deux paliers centraux (34, 36) de l'arbre primaire (12) et de l'arbre secondaire (14) sont respectivement portés par une première (38) et une seconde (40) demi-cloisons solidaires de la partie arrière (20) du carter (16) de boîte.

2. Boîte de vitesses (10) selon la revendication 1, caractérisée en ce que les première (38 ) et seconde (40) demi-cloisons sont agencées dans un même plan transversal, à l'intérieur de la partie arrière (20) du carter de boîte.

3. Boîte de vitesses (10) selon la revendication 2, caractérisée en ce que le plan transversal est délimité par une surface d'épaulement (42), qui est située à l'intérieur et en position centrale de la partie arrière (20) du carter (16) de boîte, qui est tournée vers l'avant, et contre laquelle les première (38) et seconde (40) demi-cloisons sont en appui axial.

4. Boîte de vitesses (10) selon l'une quelconque des revendications 2 ou 3, caractérisée en ce que les deux demi-cloisons (38, 40) comportent à leur périphérie des oreilles percées (74, 80) qui s'étendent transversalement, et en ce que au moins une oreille (74) de la deuxième demi-cloison (40) s'étend en regard d'une oreille (80) de la première demi-cloison (38) d'avant en arrière à la jonction des deux demi-cloisons, ces deux oreilles (74, 80) étant destinées à être traversées par au moins une vis axiale (48) de fixation des deux demi-cloisons (74, 80) à la partie arrière (20) du carter.

5. Boîte de vitesses (10) selon la revendication 4, caractérisé en ce que les deux demi-cloisons (38, 40) comportent, entre des surfaces (76, 78) qui s'étendent axialement dans leur épaisseur, un jeu de montage qui est déterminé par un entraxe (E) déterminé des paliers centraux des arbres primaire (12) et secondaire (14).

6. Boîte de vitesses (10) selon l'une quelconque des revendications précédentes, caractérisée en ce que la partie arrière (20) du carter comporte une plaque de fermeture (28) qui est rapportée à son extrémité arrière (46) et qui porte le palier d'extrémité arrière (30) de l'arbre primaire (12) et le palier d'extrémité arrière (32) de l'arbre secondaire (14).

7. Boîte de vitesses (10) selon la revendication 6, caractérisée en ce que la plaque de fermeture (28) comporte des pions (58) qui assurent son positionnement précis en appui axial l'extrémité arrière (46) de la partie arrière (20) du carter.

8. Boîte de vitesses (10) selon la revendication 7 prise en combinaison avec les revendications 3 et 4, caractérisée en ce que la plaque de fermeture (28) est assemblée à l'extrémité arrière (46) du carter par l'intermédiaire de vis axiales (58) de fixation qui traversent des pattes internes (50) de la partie arrière (20) du carter (16) de boîte, et dont les extrémités libres filetées sont reçues dans des taraudages (54) formés dans les oreilles (74) des demi-cloisons, de façon à serrer simultanément la plaque de fermeture (28) en appui axial contre la surface d'extrémité arrière (46) du carter (16) d'une part, et les demi-cloisons (38, 40) en appui contre la surface d'épaulement intérieure (42) du carter d'autre part.

9. Boîte de vitesses (10) selon l'une quelconque des revendications précédentes, caractérisée en ce que la première demi-cloison (38) comporte un alésage (72) pour recevoir un palier de guidage d'un pignon de marche arrière et des trous (73) pour le guidage d'axes de fourchettes de commande de la boîte de vitesses (10).
